# EUROPÄISCHE PATENTANMELDUNG

(11) **EP 1 108 980 A2**
(43) Veröffentlichungstag der Anmeldung: **20.06.2001**
(21) Anmeldenummer: 00122761.0
(22) Anmeldetag: 19.10.2000
(51) Int. Cl.: G01B 21/24

(54) **Ergonomisch gestaltete, störsignalreduzierende Lagemesssonde zum gegenseitigen Ausrichten von Körpern**

(30) Priorität: 08.12.1999 DE 19959220
(71) Anmelder: Prüftechnik Dieter Busch AG, 85737 Ismaning (DE)
(72) Erfinder: Busch, Dieter, 85737 Ismaning (DE)

(57) **Zusammenfassung**

Die ergonomisch ausgestattete und störsignalreduzierende Lagemeßsonde zum gegenseitigen Ausrichten von Körpern weist eine Spracheingabe- oder auch Sprachausgabe-Einrichtung auf. Die Anbindung an ein extern angeordnetes Bedienteil oder an einen übergeordneten Leitrechner erfolgt drahtlos, entweder mittels einer Infrarotschnittstelle oder mit einer höchstfrequent arbeitenden Radioverbindung. Eine fehlervermindernde Messwerterfassung wird durch Mittelwertbildung bewirkt. Der Mittelwert repräsentiert mehrere einzelne Messwerte. Bei der Erfassung der einzelnen Messwerte wird darauf geachtet, dass die Zeiten der Messwertnahme und die zeitlichen Maxima einer Köperschallschwingung am Messobjekt im wesentlichen asynchron zueinander liegen.

## Beschreibung

Die Erfindung betrifft eine Lagemeßsonde zum gegenseitigen Ausrichten von Körpern sowie ein Verfahren zur effizienten Anwendung einer solchen Lagemeßsonde.

### [Stand der Technik]

Eine Lagemeßsonde der gattungsgemässen Art ist bekannt aus der WO 97/21980. In dieser wird beschrieben, wie das gegenseitige Ausrichten von Körpern, insbesondere das Parallelrichten von Wellen, Walzen oder dgl. dadurch erheblich erleichtert und beschleunigt werden kann, dass mittels einer hochpräzisen Messvorrichtung zunächst eine Referenzrichtug anhand eines ersten Körpers bestimmt wird, und als Vergleichswert in Bezug auf ein geeignetes Koordinatensystem gespeichert werden kann. In einem nachfolgenden Messvorgang wird mit derselben Lagemeßsonde die Ausrichtung eines zweiten Körpers in hochpräziser Weise bestimmt, so dass Fehler in der gegenseitigen Ausrichtung solcher Körper dadurch erkannt werden können, dass ein Vergleich, d.h. eine Differenzbildung der erhaltenen Messergebnisse durchgeführt wird. Weitere Körper können in anschliessenden Messungen auf die gleiche Weise kontrolliert werden. In Anschluss an den Vergleich der Messergebnisse kann eine Korrektur der Ausrichtung solcher Körper erfolgen, wobei die Wahl einer geeigneten Referenzrichtung praktisch beliebig ist. Gemäss der WO 97/21980 wird jedoch nicht näher spezifiziert, in welcher Weise das Gerät äusserlich ausgestaltet sein sollte oder welche Randbedingungen bei dessen Bedienung besonders zu beachten sind, um das Verfahren in bestmöglicher und effizientester Weise auszuführen.

Eine weitere Lagemeßsonde der gattungsgemässen Art ist bekannt aus der DE 19800901.1, welche aufgrund des dort vorgeschlagenen Messprinzips von besonders kleiner Bauform sein kann und dementsprechend mit einem ergonomisch gestalteten Handgriff zur erleichterten Bedienung versehen sein kann. Trotz der in der DE 19800901.1 dargestellten Verbesserungen fehlt jedoch eine weitergehende Lehre hinsichtlich Vorrichtungsdetails und verfahrensmässigen Besonderheiten, mittels welchen in besonders schneller und effizienter Weise genauestmögliche Messergebnisse erzielt werden können.

### [Aufgabe der Erfindung]

Es ist Aufgabe der Erfindung, die vorgenannten Unvollkommenheiten in kostengünstiger Weise zu eliminieren und eine Meßsonde bereitzustellen, mit welcher gattungsgemässe Messaufgaben mit noch grösserer Effizienz abgearbeitet werden können. Diese Aufgabe wird mit Vorrichtungen und zugehörigen Verfahren gelöst, wie sie durch die Merkmale der unabhängigen und abhängigen Patentansprüche spezifiziert werden. Diese Merkmale betreffen insbesondere eine Ausgestaltung der erfindungsgemässen Vorrichtung, welche geeignet ist, sprachliche Befehle einer Bedienperson entgegenzunehmen und mittels sparacherkennender Hard- und Software so zu verarbeiten, dass ein folgerichtiges Umschalten in einen anderen, gewünschten Maschinenzustand bewirkt wird. Weiterhin kann die erfindungsgemässe Meßsonde durch eine Vorrichtung realisiert sein, welche in der Lage ist, mittels einer Sprachausgabeeinrichtung verständliche Signale zu geben oder ermittelte Meßresultate in einer natürlichen Sprache zu artikulieren.

Zum schnelleren und verbesserten Erfassen von interessierenden Messwerten kann die erfindungsgemässe Einrichtung so ausgestaltet sein, dass eine an ergonomisch besonders günstiger Stelle angebrachte Einzeltaste oder Triggereinrichtung vorhanden ist, deren Betätigung mittels Daumen oder Zeigefinger durch eine Bedienperson dazu führt, dass ein einzelner, aktueller Messwert (oder ein aktueller Mittelwert von mehreren Messwerten) abgespeichert wird. Hierzu ist ein elektronischer Speicher vorgesehen.

Weiterhin kann die erfindungsgemässe Vorrichtung so ausgestaltet sein, dass sie eine hochauflösende Anzeigevorrichtung zur Wiedergabe von alphanumerischen oder graphischen Informationen aufweist, anhand welcher eine Bedienperson erkennen kann, ob und in welcher Art an den gerade vermessenen Gegenständen irgendwelche Ausricht- oder andere Korrekturmassnahmen durchzuführen sind.

Die erfindungsgemässe Vorrichtung ist als Komplettgerät verwendbar. Sie kann aber auch mit einem extern angeordneten Bedienteil in Verbindung stehen, oder mit einem übergeordneten Leitrechner. Auf diese Weise gelingt es, das Gewicht der zu transportierenden Meßsonde zu reduzieren, wodurch das Handling erleichtert wird. Da auch eine Verwendung von Verbindungskabeln zwischen den genannten Komponenten insofern nachteilig wäre, als die Konzentration der Bedienperson auf die eigentlichen Messwertnahme gestört wird, wird vorgesehen, dass das extern angeordnete, separate Bedienteil, oder ein übergeordneter Leitrechner drahtlos angeschlossen sein sollen. Hierzu sind sowohl bei der Meßsonde als auch bei dem genannten Bedienteil oder Leitrechner Datenübertragungsvorrichtungen vorgesehen, welche mit Infrarotschnittstellen ausgestattet sind oder mittels höchstfrequenter Radiowellen im Zentimeter-Bereich arbeiten.

Da jedoch nicht nur die genannten Verbindungskabel störenden Charakter haben, sondern auch stiftförmige Antennenelemente den Arbeitsablauf nachteilig beeinflussen, wird in einer besonderen Ausgestaltung der Erfindung vorgesehen, eine Sende- oder Empfangsantenne für die genannten Radiowellen in einen der Handgriffe zu integrieren, mit welchen das Gerät ausgestattet sein soll.

Sofern im Zusammenhang mit einer Messwertnahme durch die genannten Leitrechner oder extern angeordnete Bedienteile einzelne Bedienungs- oder Speicherfunktionen ausgeführt werden, kann es vorteilhaft sein, die erfindungsgemäss vorgesehene Sprachausgabe- oder Spracheingabefunktionen auf diesen Geräten zu lokalisieren, welches zu einer Gewichtseinsparung führen kann. Von besonderem Vorteil ist es jedoch, sowohl bei den genannten externen Geräten als auch bei der portierbaren eigentlichen Meßsonde solche sprachbasierte Unterstützung vorzusehen.

Zur weitestgehenden Verringerung von Messfehlern sieht die Erfindung vor, dass für einen einzelnen Messvorgang ein Mittelwert bestimmt wird, welcher auf mehreren Messwerten beruht, die in einer Sequenz zu unterschiedlichen Zeiten erfasst werden. Die hochpräzise Messung der Orientierung von Meßsonde und zu vermessendem Körper kann durch unbeabsichtigte Zusatzbewegungen nachhaltig gestört werden. Die Erfindung sieht daher vor, Vibrationen und andere periodische Bewegungen eines Messobjektes vor einem Messvorgang zu identifizieren. Dadurch kann die genannte Mittelwertbildung dann so durchgeführt werden, dass der Einfluss solcher periodischer Bewegungen, welche von einer technischen Netzfrequenz (16, 50, 60 Hz) oder einem rotierenden Maschinenteil verursacht werden, auf ein Mindestmass limitiert bleibt. Hierzu genügt es gemäss einer ersten Verfahrensweise der Erfindung, dass eine zeitsequentielle Folge einzelner Messwerterfassungen in stochastischer, nichtperiodischer Weise ausgeführt wird, und die einzeln erfassten Messwerte einer Mittelwertbildung zugeführt werden. Die auf diese Weise erhaltenen Mittelwerte sind dann genauer als solche, welche von einer vorherrschenden Körperschallfrequenz zufällig gestört sind. In einer zweiten erfindungsgemässen Verfahrensweise zur Lösung dieses Teilproblems wird darauf geachtet, dass einzelne Messwerte, die einer Mittelwertbildung zugeführt werden sollen, nicht mit einer Frequenz (oder ganzzahligen Bruchteilen davon) erfasst werden, welche im Bereiche von 47 bis 53 Hz oder von 56 Hz bis 64 Hz liegen, oder in einem Bereich einer anderen technischen Netzfrequenz liegen. Auch Frequenzbereiche und zugehörige Subharmonische, welche mit der Rotations- oder Schwingungsfrequenz einer in einen zu vermessenden Körper integrierten Maschine übereinstimmen, sind erfindungsgemäss zu vermeiden. Das gleiche gilt für andere stärker in Erscheinung tretende periodische Schwingungen am Messobjekt, deren Ursache unbekannt sein mag. Solche Schwingungen werden zunächst mittels geeigneter Meßsonden detektiert und dann per Tastatur oder Spracheingabe in die Meßsonde eingegeben, oder in deren zugehörige Peripherie. Auch auf diese Weise wird verhindert, dass in zufälliger Weise vibrationsbedingte Bewegungsabläufe Einfluss auf das Messergebnis haben können. In einer dritten erfindungsgemässen Verfahrensweise zur Lösung des genannten Teilproblems wird so verfahren, dass zunächst ein Spektrum der am Messort eventuell vorhandenen Vibrationsbewegungen aufgenommen wird, wozu handelsübliche Messgeräte verwendet werden. Es wird sodann festgestellt, bei welcher Frequenz die aktuellen Beschleunigungs- oder Geschwindigkeitswerte minimal sind, und die Messwertnahme zur Bestimmung der Orientierung von Gegenständen wird mit eben dieser Frequenz, oder einem ganzzahligen Teil davon, ausgeführt. Hierdurch wird sichergestellt, dass der Einfluss von Vibrationsbewegungen auf ein möglichst niedriges Mass reduziert wird. Wie oben erwähnt, ist jedoch Voraussetzung, dass aus einer Mehrzahl einzelner so erfasster Messwerte ein zugehöriger Mittelwert gebildet wird. Gemäss der Erfindung kann die Validität eines solchen Mittelwertes dadurch überprüft werden, dass ein zugehöriges Streuungs- oder Varianzmass vordefinierte Grenzwerte nicht überschreitet. Bei Auftreten übergrosser Varianzwerte kann gemäss der Erfindung ein Fehlersignal gegeben werden, oder es wird der errechnete Mittelwert sofort verworfen.

Die der Erfindung zugrunde liegende Aufgabe wird unter Verwendung einer erfindungsgemässen Vorrichtung dadurch gelöst, dass ein Verfahren zum Messen und zur Beurteilung der gegenseitigen Ausrichtung von Körpern angegeben wird, welches folgende Schritte enthält:
- Kontaktieren einer Meßsonde an einen ersten Körper, welcher eine Referenzfläche oder eine Referenzkante aufweist,
- Eingabe eines Befehls durch eine Bedienperson an die Meßsonde per Spracheingabe,
- bedarfsweises Warten auf ein optisches oder akustisches, insbesondere sprachgebundenes, Quittungssignal,
- Kontaktieren der Meßsonde an einen zweiten Körper, welcher eine Messfläche oder eine Messkante aufweist,
- Eingabe eines weiteren Befehls an die Meßsonde per Spracheingabe,
- bedarfsweises Warten auf ein optisches oder akustisches, insbesondere sprachgebundenes Quittungssignal,
- bedarfsweise Eingabe von Dimensionsdaten, welche die Anordnung oder Distanzen der Gegenstände zueinander beschreiben, mittels einer Tastatur und/oder mittels einer Spracheingabeeinrichtung oder unter Verwendung eines Displays, welches eine geordnete oder strukturierte Eingabe der Dimensionsdaten erleichtert,
- Errechnen von geometrischen Daten, welche die gegenseitige Orientierung der Körper in differenzieller Weise beschreiben
- Ausgabe von Informationen, insbesondere von Messwert-Informationen, welche Differenzen der Orientierung zwischen erstem und zweitem Körper aufweisen, auf optischer oder akustischer, insbesondere sprachgebundener Basis, an eine Bedienperson
- bedarfsweise Ausgabe von Informationen, welche eine Bedienperson in die Lage versetzen können, Korrektur- oder Justagemassnahmen an entweder dem ersten oder dem zweiten Körper auszuführen, so dass die gegenseitige Ausrichtung dieser Körper verbessert wird.

Eine weitere Lösung ergibt sich bei der Anwendung des folgenden Verfahrens zum Messen und zur Beurteilung der gegenseitigen Ausrichtung von Körpern, welches durch durch folgende Schritte gekennzeichnet ist:
- Ermittlung von Körperschallgrössen, welche in der Nähe oder unmittelbar an einer vorgesehenen Messfläche von zu vermessenden Körpern vorhanden sind,
- Analyse der Körperschallgrössen nach periodischen und nichtperiodischen Anteilen,
- Ermittlung einer Frequenz, welche durch einen Minimalwert der periodischen Anteile der ermittelten und analysierten Körperschallgrössen ausgezeichnet ist,
- mehrfache, mittelwertbildende Messwerterfassung zur Darstellung von Orientierungs-Indikationswerten an einem der Körper, mit einer Wiederhol-Frequenz, welcher derjenigen Frequenz entspricht, bei der der Minimalwert der periodischen Anteile an Körperschallgrössen erkannt worden ist, oder mit einem ganzzahligen Bruchteil einer solchen Frequenz.

### [Beispiele]

Die Erfindung wird im folgenden anhand der in der Zeichnung dargestellten Beispiele erläutert.

Es zeigt
Fig. 1 eine perspektivische Ansicht auf eine erfindungsgemässe Lagemeßsonde, welche auf eine zu vermessende Walze aufgesetzt ist, im Zusammenspiel mit einem externen Bedienteil
Fig. 2 eine vergrösserte Darstellung einer Lagerneßsonde, welche mit einem Display ausgestattet ist
Fig. 3 ein Beispiel eines an einem Messort existierenden Körperschall-Frequenzspektrums.

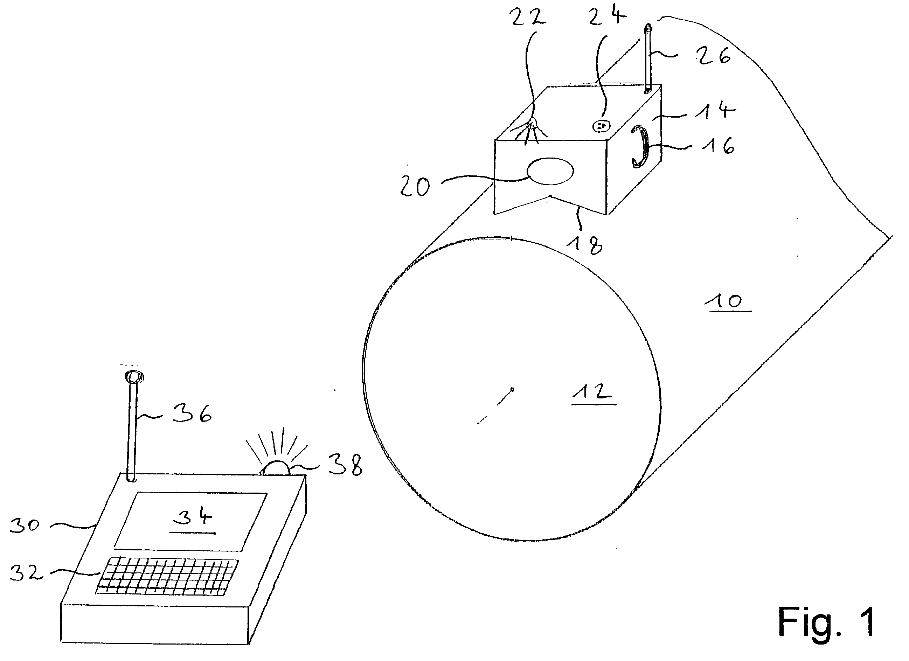

Die in Fig. 1 gezeigte Meßsonde 14 ist geeignet, ihre inertiale Orientierung im Raum, oder bezüglich eines Laborkoordinatensystems, kontinuierlich festzustellen. Dazu besitzt sie zumindest zwei optische Kreisel samt zugehöriger Elektronik (nicht gezeigt), wie dies an sich bekannt ist. Die Meßsonde 14 ist mit Vorteil so eingerichtet, dass sie die durch die Erdrotation verursachte Drehbewegung kompensiert, mittels einer Technologie, welche ebenfalls an sich bekannt ist. Wie in Fig. 1 gezeigt, wird die Meßsonde 14 z.B. mit ihrer prismenförmigen Gehäuseoberfläche auf die Oberfläche einer Walze 10 aufgesetzt und bestimmt so deren Orientierung gegenüber drei Winkelkoordinaten des Raumes. Diese Winkelkoordinaten werden englischsprachig auch mit pitch, yaw und roll bezeichnet. Zum Aufsetzen der Meßsonde auf zu vermessende Oberflächen sind Griffe vorgesehen, von denen beispielsweise Griff 16 gezeigt ist. Die Meßsonde 14 kann entweder autonom die durch die optischen Kreisel gewonnenen Signale verarbeiten, oder es kann dieses durch einen extern, insbesondere einen tragbaren oder verfahrbaren Rechner oder Bedieneinheit 30 durchführen lassen. (Dieser Rechner weist zumindest eine Anzeigeeinheit 34 und eine Eingabevorrichtung 32 auf, z.B. in Form einer Tastatur). Es ist gemäss der Erfindung vorgesehen, dass mindestens eine, bevorzugt zwei drahtlose Datenübertragungseinrichtungen vorhanden sind, von denen eine in die Meßsonde 16 eingebaut ist. Eine weitere kann im Rechner 30 vorgesehen sein. Bezugsziffern 22, 38 zeigen zugehörige Transponder-Einrichtungen, mit denen eine Datenübertragung auf optischem Wege möglich ist, z.B. mittels infrarot arbeitender Datenübertragugnsanlagen. Hierzu kann mit Vorteil ein Datenübertragungsprotokoll verwendet werden, wie es gemäss der sogenannten IRDA-Schnittstelle definiert ist . Eine schnellere Datenübertragung kann mittels der sogenannten USB-Schnittstelle durchgeführt werden, welche nicht nur drahtgebunden, sondern auch in drahtloser Ausführung angeboten wird.

Anstelle der lichtoptisch wirkenden Datenübertragung kann alternativ oder zusätzlich eine radiofrequente Datenübertragung vorgesehen sein. Hierzu zeigt Fig. 1 die als Transponderelemente wirkenden Antennen 26 und 36, deren Sendefrequenzen bevorzugt in verfügbaren Gigaherz-Bändern liegen. In besonderer Ausgestaltung der Erfindung, bei der es darauf ankommt, die Baugrösse der Meßsonde 14 besonders klein zu halten, wird die Antenne 26 in den Griff 16 integriert.

Es ist gemäss der Erfindung vorgesehen, die Arbeit einer Bedienperson in umfangreicher Weise dadurch zu erleichtern, dass Kommandos an die Meßsonde per Spracheingabe erfolgen können. Dies ist besonders dann hilfreich, wenn die relativ empfindliche und kostspielige Meßsonde 14 dadurch vor versehentlichen Stössen geschützt werden soll, dass eine Bedienperson das Gerät ständig mit zumindest einer Hand führt, sofern es sich nicht in einer Parkposition befindet. Zum Zwecke der Spracheingabe ist ein Mikrofon 24 in die Meßsonde integriert. Zusätzlich kann eine Bedienerführung per Sprachausgabe vorgesehen sein, welche eine Bedienperson auffordern kann, eine Messung zu wiederholen, ein Bereitschaftssignal auszugeben, Angaben zur aktuellen Qualität der Messergebnisse zu machen, und vergleichbare Informationen. Zu diesem Zweck ist ein Lautsprecher 20 vorgesehen. Dieser kann bei lauten Umgebungsgeräuschen durch einen Kopfhörer ersetzt werden (nicht gezeigt).

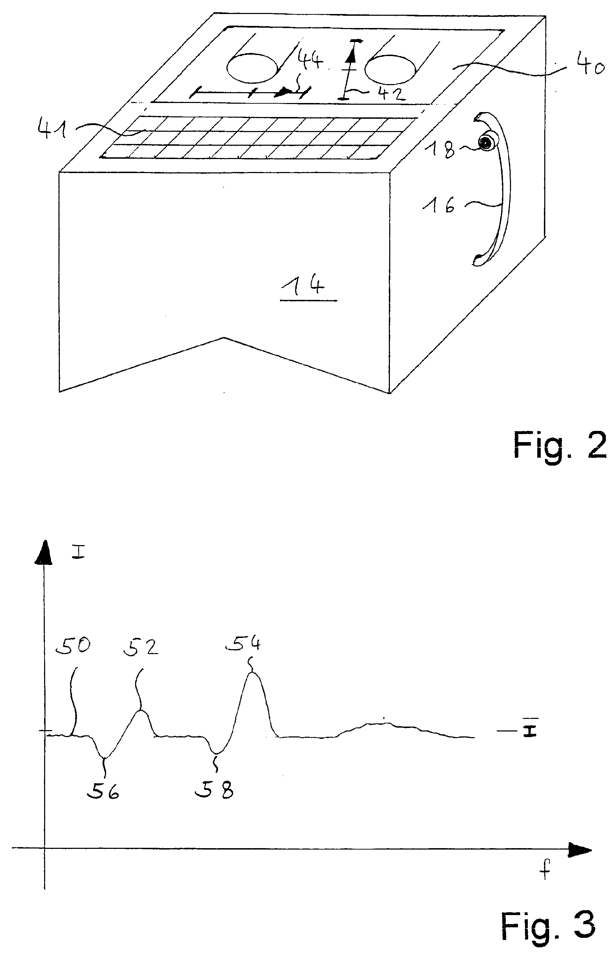

In einer bevorzugten Ausgestaltung der Erfindung enthält die Meßsonde 14 weiterhin eine Anzeigevorrichtung (Display) 40, mit welchem Messergebnisse visualisiert werden können. Dies können nicht nur numerische Kennwerte sein, welche angeben, ob und in welchem Umfange eine Fehlausrichtung einer zu vermessende Walze oder dgl. vorliegt, sondern insbesondere zusätzliche in graphischer Form angezeigte Werte. Diese können auch zusätzliche Informationen enthalten, auf welche Weise eine bestmögliche Korrektur eines aufgefundenen Fehlwinkels möglich ist. Wie Fig. 2 zeigt, sind zum Beispiel auf dem Display 40 sogenannte Bar-Graphs oder vergleichbare Visualisierungs-Elemente vorgesehen. Bar-Graph 44 weist Grösse und Richtung einer aktuell vorhandene Fehlausrichtung eines vermessenen Körpers in Azimut aus, während Bar-Graph 42 ein ähnliches Messergebnis für die Elevation angibt. Um in bequemer Weise den Beginn oder das Ende eines Mess-Zeitraumes zu signalisieren, kann ein Taster 18 vorgesehen sein, sofern das Gerät nicht über die vorher beschriebene Spracheingabe-Möglichkeit verfügt.

Das in Fig. 3 dargestellte akustische Spektrum bezieht sich auf Vibrationen und Körperschallschwingungen, wie sie an einem vorgesehenen Messort mittels geeigneter Geräte erfasst werden, an dem eine Meßsonde aufgesetzt wird oder werden soll. Es wird die Intensität I der Schwingungsgeschwindigkeit über die Frequenz f dargestellt. Sofern solche Vibrationen ein gewisses Mass überschreiten, können sie als Fehlergrösse in ein mittels der Meßsonde erhaltenes Meßergebnis eingehen. Das in Fig. 3 dargestellte Spektrum weist zum Beispiel einen niederfrequenten Anteil 50 auf, welcher in der Nähe eines Mittelwertes /I liegt. Weiterhin dargestellt sind Maxima 52, 54 des Spektrums sowie weniger stark in Erscheinung tretende Anteile 56, 58.
Gemäss der Erfindung wird der genannte Fehlereinfluss dadurch reduziert, dass nicht nur ein einzelner Messwert zur Bestimmung der Lage und Orientierung einer Meßsonde herangezogen wird, sondern mehrere von diesen, welche zu einem Mittelwert zusammengefasst werden. Dies stellt eine erste Massnahme zur Reduzierung des genannten Fehlers dar, durch welche gleichzeitig weitere Fehlereinflüsse verringert werden. Erfindungsgemäss ist es jedoch wichtig, die Erfassung der mehreren Messwerte in solchen Zeitabständen vorzunehmen, daß keine Synchronisationserscheinungen mit einer vorherrschenden Körperschallschwingung eintreten. Dies kann entweder dadurch erreicht werden, dass die Erfassung einzelner Messwerte in stochastischer Weise erfolgt, d.h. gezielt unregelmässig und mit zufälligen Zeitabständen zwischen den Messungen
Alternativ kann eine solche Meßsequenz mit gleichen Zeitabständen (also mit einer konstanten Frequenz) durchgeführt werden. Gemäss der Erfindung ist dabei jedoch zu beachten, dass diese Frequenz, oder deren Vielfache, nicht mit einer Frequenz zusammenfällt, welche einem Intensitätsmaximum 52,54 zugeordnet ist. Günstiger ist es vielmehr, die mehrfachen Einzelmessungen mit einer solchen Frequenz auszuführen, welche den Intensitätsminima 56, 58 entspricht oder eine Teilfrequenz (Subharmonische) dieser Frequenzen darstellt. Prinzipiell ist es nützlich, dabei eine solche Messfrequenz zu vermeiden, welche im ganzzahligen Zusammenhang mit einer technischen Netzfrequenz steht (z.B. 16,6 Hz, 50 Hz, 60 Hz).

## Patentansprüche

1. Vorrichtung zum Messen und zur Beurteilung der gegenseitigen Ausrichtung von Körpern, mit mindestens einem Laserkreisel,
dadurch gekennzeichnet, dass die Vorrichtung geeignet ist, sprachliche Befehle einer Bedienperson entgegenzunehmen und zu verarbeiten, so dass die Vorrichtung in einen veränderten Maschinenstatus gebracht werden kann.

2. Vorrichtung zum Messen und zum Messen und zur Beurteilung der gegenseitigen Ausrichtung von Körpern, mit mindestens einem Laserkreisel,
dadurch gekennzeichnet, dass die Vorrichtung geeignet ist, ermittelte Messresultate mittels einer Sprachausgabeeinrichtung akustisch darzustellen oder zu signalisieren.

3. Vorrichtung zum Messen und zur Beurteilung der gegenseitigen Ausrichtung von Körpern, mit mindestens einem Laserkreisel,
dadurch gekennzeichnet, dass die Vorrichtung eine ergonomisch angebrachte Einzeltaste zur Betätigung mittels Daumen oder Zeigefinger aufweist, welche bei Betätigung durch eine Bedienperson die Speicherung eines einzelnen aus einer zeitsequentiellen Folge von Messwerten bewirkt.

4. Vorrichtung zum Messen und zur Beurteilung der gegenseitigen Ausrichtung von Körpern, mit mindestens einem Laserkreisel,
dadurch gekennzeichnet, dass die Vorrichtung eine hochauflösende Anzeigevorrichtung zur Wiedergabe von alphanumerischen oder graphischen Informationen aufweist, anhand derer eine Bedienperson erkennen kann, ob und in welcher Art Korrekturmassnahmen an zu vermessenden Gegenständen auszuführen sind.

5. Vorrichtung zum Messen und zur Beurteilung der gegenseitigen Ausrichtung von Körpern, mit mindestens einem Laserkreisel,
dadurch gekennzeichnet, dass die Vorrichtung mit einem extern angeordneten Bedienteil oder einem übergeordneten Leitrechner auf drahtlose Weise Daten, Befehle oder andere Informationen austauschen oder von diesem entgegennehmen kann.

6. Vorrichtung nach Anspruch 5,
dadurch gekennzeichnet, dass eine Datenübertragungsvorrichtung vorhanden ist, welche mit Infrarotlicht oder mittels höchstfrequenter Radiowellen arbeitet.

7. Vorrichtung nach Anspruch 6,
bei der eine Antenne zum Senden und/oder zum Empfang höchstfrequenter Radiowellen in einen Handgriff der Vorrichtung integriert ist.

8. Vorrichtung nach Anspruch 5 oder 6,
dadurch gekennzeichnet, dass der übergeordnete Leitrechner eine Spracheingabe- oder Sprachausgabefunktion enthält.

9. Vorrichtung nach einem der vorhergehenden Ansprüche,
mittels welcher eine zeitsequentielle Folge von Messwerterfassungen zur Feststellung der Orientierung von Körpern in stochastischer, nicht-periodischer Weise ausgeführt wird.

10. Vorrichtung nach einem der Ansprüche 1 bis 8,
dadurch gekennzeichnet, dass eine mittelwertbildende Messwerterfassung zur Feststellung der räumlichen Orientierung von Körpern oder der Vorrichtung in zeitsequentieller Weise mit einer Messfrequenz erfolgt, welche nachfolgend genannte Frequenzbereiche oder -werte, ganzzahlige Bruchteile oder ganzzahlige Vielfache davon ausschliessen:
- ein Bereich von 47 bis 53 Hz oder von 56 Hz bis 64 Hz
- ein Bereich einer anderen technischen Netzfrequenz, z.B. 16,66 Hz +- 10%
- einer Rotations- oder Schwingungsfrequenz einer in einem zu vermessenden Körper integrierten Maschine
- ein Frequenzband, welches sich in direkter Nähe einer mechanischen Beschleunigungsfrequenz befindet, die an einem gewählten Messort mit überdurchschnittlich grosser Intensität auftritt oder dort in Erscheinung treten kann.

11. Vorrichtung nach einem der Ansprüche 1 bis 8, dadurch gekennzeichnet, dass an einem gewählten Messort eine mittelwertbildende Messwerterfassung zur Feststellung der räumlichen Orientierung von Körpern oder der Vorrichtung in zeitsequentieller Weise mit einer solchen Messfrequenz erfolgt, bei welcher aktuelle mechanische Beschleunigungswerte mit vergleichsweise geringer Intensität vertreten sind oder einen Minimalwert annehmen.

12. Verfahren zum Messen und zur Beurteilung der gegenseitigen Ausrichtung von Körpern, gekennzeichnet durch folgende Schritte:
- Kontaktieren einer Meßsonde an einen ersten Körper, welcher eine Referenzfläche oder eine Referenzkante aufweist,
- Eingabe eines Befehls durch eine Bedienperson an die Meßsonde per Spracheingabe,
- bedarfsweises Warten auf ein optisches oder akustisches, insbesondere sprachgebundenes, Quittungssignal,
- Kontaktieren der Meßsonde an einen zweiten Körper, welcher eine Messfläche oder eine Messkante aufweist,
- Eingabe eines weiteren Befehls an die Meßsonde per Spracheingabe,
- bedarfsweises Warten auf ein optisches oder akustisches, insbesondere sprachgebundenes Quittungssignal,
- bedarfsweise Eingabe von Dimensionsdaten, welche die Anordnung oder Distanzen der Gegenstände zueinander beschreiben, mittels einer Tastatur und/oder mittels einer Spracheingabeeinrichtung oder unter Verwendung eines Displays, welches eine geordnete oder strukturierte Eingabe der Dimensionsdaten erleichtert,
- Errechnen von geometrischen Daten, welche die gegenseitige Orientierung der Körper in differenzieller Weise beschreiben
- Ausgabe von Informationen, insbesondere von Messwert-Informationen, welche Differenzen der Orientierung zwischen erstem und zweitem Körper aufweisen, auf optischer oder akustischer, insbesondere sprachgebundener Basis, an eine Bedienperson
- bedarfsweise Ausgabe von Informationen, welche eine Bedienperson in die Lage versetzen können, Korrektur- oder Justagemassnahmen an entweder dem ersten oder dem zweiten Körper auszuführen, so dass die gegenseitige Ausrichtung dieser Körper verbessert wird.

13. Verfahren zum Messen und zur Beurteilung der gegenseitigen Ausrichtung von Körpern, gekennzeichnet durch folgende Schritte:
- Ermittlung von Körperschallgrössen, welche in der Nähe oder unmittelbar an einer vorgesehenen Messfläche von zu vermessenden Körpern vorhanden sind,
- Analyse der Körperschallgrössen nach periodischen und nichtperiodischen Anteilen,
- Ermittlung einer Frequenz, welche durch einen Minimalwert der periodischen Anteile der ermittelten und analysierten Körperschallgrössen ausgezeichnet ist,
- mehrfache, mittelwertbildende Messwerterfassung zur Darstellung von Orientierungs-Indikationswerten an einem der Körper, mit einer Wiederhol-Frequenz, welcher derjenigen Frequenz entspricht, bei der der Minimalwert der periodischen Anteile an Körperschallgrössen erkannt worden ist, oder mit einem ganzzahligen Bruchteil einer solchen Frequenz.

14. Verfahren ähnlich Anspruch 13, dadurch gekennzeichnet, dass die Messwertnahme in stochastischer Sequenz erfolgt, so dass die zeitlichen Abstände der Messwerterfassungen regellos verteilt sind oder einer vorgegebenen stochastischen Verteilung gehorchen.
